# DEMANDE DE BREVET EUROPEEN

(11) **EP 0 644 346 A1**
(43) Date de publication de la demande: **22.03.1995**
(21) Numéro de dépôt: 94401681.5
(22) Date de dépôt: 21.07.1994
(51) Int. Cl.: F16C 39/06, H01F 7/02

(54) **Barreau magnétique courbe ou rectiligne, formé d'aimants disjoints**

(30) Priorité: 16.09.1993 FR 9311047
(71) Demandeur: AEROSPATIALE Société Nationale Industrielle, F-75781 Paris Cédex 16 (FR)
(72) Inventeur: Marroux, Olivier, F-75016 Paris (FR)
(74) Mandataire: Rinuy, Santarelli

(57) **Abrégé**

Barreau magnétique (10) comportant une âme aimantée (11) allongée, selon une ligne moyenne (L), enserrée entre deux pièces polaires (12,13) parallèles l'une à l'autre et longeant cette âme aimantée transversalement à son aimantation permanente, caractérisé en ce que cette âme aimantée comprend sensiblement, le long de cette ligne moyenne, une succession discontinue d'aimants identiques disjoints (14).

L'invention s'applique notamment à la réalisation de paliers ou de butées magnétiques.

## Description

L'invention concerne un barreau à aimantation permanente, comportant des aimants interposés entre des pièces polaires.

De nombreux dispositifs magnétiques, tels que notamment les paliers magnétiques, font intervenir des aimants permanents au sein de barreaux à aimantation permanente, rectilignes ou incurvés en sorte de former des couronnes.

De telles couronnes à aimantation permanente sont notamment mises en oeuvre dans les dispositifs décrits dans les documents US-3.937.533, US-3.955.858, US-4.000.929, US-4.043.614, US-4.077.678, US-4.211.452, US-4.470.644 ou EP-0.284.487.

Ces couronnes comportent des âmes à aimantation permanente enserrées entre deux pièces polaires ferromagnétiques. Lorsque le sens de l'aimantation permanente est axial, les deux pièces polaires sont disposées axialement de part et d'autre de l'âme en étant généralement aplaties transversalement à l'axe ; ces deux pièces polaires sont en pratique identiques et ont des diamètres moyens sensiblement égaux au diamètre moyen de l'âme. Lorsque le sens de l'aimantation permanent est radial, les deux pièces polaires sont des portions de cylindre concentriques disposées radialement de part et d'autre de l'âme.

Le document EP-0.284.487 décrit également un palier magnétique rectiligne, faisant intervenir des barreaux rectilignes à aimantation permanente. Dans ce cas, aussi bien l'âme à aimantation permanente que les pièces polaires qui l'enserrent sont rectilignes, les deux pièces polaires étant disposées transversalement au sens de l'aimantation permanente.

Ces âmes sont destinées à générer, le long de saillies allongées du barreau destinées à border les entrefers, en pratique des tranches des pièces polaires, un flux d'induction qui soit aussi constant que possible, que le barreau soit courbe ou rectiligne. C'est pourquoi l'âme est en pratique constituée en totalité de matériau à aimantation permanente, par exemple en Samarium-Cobalt.

L'obtention de tels barreaux continus en matériau à aimantation permanente pose en pratique des difficultés. Tout d'abord, seuls de petits barreaux rectilignes ou en couronne peuvent être réalisés en une seule pièce compte tenu des exigences d'homogénéité d'aimantation et de compactage lors du frittage. Pour de plus grandes tailles (typiquement des diamètres supérieurs à 70 mm), on a recours à des pièces élémentaires couramment appelées "tuiles" destinées à être ajustées tranche contre tranche avec un maximum de précision en sorte d'approximer une âme aimantée continue. Surtout lorsque l'âme à réaliser est courbe (refermée le plus souvent en couronne), son obtention est longue et coûteuse compte tenu de l'obligation à la fois de conformer les tuiles avec une géométrie très précise spécifique du barreau à réaliser, et de donner à toutes les tuiles les mêmes caractéristiques d'aimantation. Ces tuiles ne peuvent être mises en fabrication que lorsque le dessin de la couronne est parfaitement défini.

L'invention a pour objet de pallier ces inconvénients grâce à un barreau à aimantation permanente comportant une âme à aimantation permanente enserrée entre des pièces polaires, cette âme ayant une structure facile à réaliser pour un coût plus faible que par le passé avec des délais de fabrication faibles, tout en garantissant une homogénéité, au moins aussi bonne que par le passé, du flux d'induction magnétique le long des pièces polaires, en pratique le long de leurs tranches formant saillies allongées destinées à border des entrefers.

L'invention propose à cet effet un barreau magnétique comportant une âme aimantée allongée, selon une ligne moyenne, enserrée entre deux pièces polaires parallèles l'une à l'autre et longeant cette âme aimantée transversalement à son aimantation permanente, caractérisé en ce que cette âme aimantée comprend, sensiblement le long de cette ligne moyenne, une succession discontinue d'aimants identiques disjoints.

Une telle structure de barreau offre de nombreux avantages :
- elle permet de n'utiliser que des aimants de forme simple, de préférence cylindriques (en variante, ils peuvent être notamment parallélépipédiques), dont la fabrication peut être aisément standardisée,
- cette faculté de standardisation est renforcée par le fait que les aimants de forme simple peuvent être fabriqués avant de connaître leur destination finale (des aimants donnés peuvent aussi bien servir à constituer des barreaux rectilignes que des couronnes de diamètres quelconques) ; il en résulte une minimisation du temps entre la conception et la réalisation d'un barreau,
- elle permet, grâce à la mise en oeuvre au sein de l'âme d'une structure de maintien fixée aux pièces polaires et contenant les aimants à la manière d'une cartouchière ou d'un barillet, de minimiser les efforts appliqués aux aimants (ils sont fragiles),
- une telle structure de maintien permet un très bon maintien des aimants, autorisant éventuellement une absence de colle,
- une telle absence de colle rend possible une éventuelle amovibilité des aimants (il suffit de séparer la structure de maintien de l'une au moins des pièces polaires),
- on peut ajuster la raideur finale d'un palier comportant ce barreau, en adaptant le nombre d'aimants de l'âme (en cas de structure de maintien comportant des logements, on peut ainsi choisir de laisser libres certains de ces logements ; à l'inverse, on peut percer des logements supplémentaires pour pouvoir rajouter des aimants),
- comme les aimants peuvent être très petits, ce qui conduit à la mise en oeuvre d'un grand nombre d'aimants dans un barreau donné, on peut tolérer des disparités entre les performances magnétiques des aimants : leur grand nombre et la distribution du flux dans les pièces polaires conduit à un lissage statistique de ces performances, conduisant à une constance tout à fait acceptable du flux dans les pièces polaires,
- la structure en cartouchière ou barillet de l'âme (aimants engagés dans des logements d'une structure de maintien) est simple permettant facilement la prédiction et le contrôle des déformations de l'âme avec la température,
- l'invention rend facile et peu coûteuse la réalisation de barreaux de grande taille, notamment de couronnes aimantées de grand diamètre,
- l'invention permet pourtant, malgré la discrétisation des sources de flux, l'obtention, le long des bords des pièces polaires déterminant des entrefers, d'une bonne constance du flux d'induction magnétique.

Selon des caractéristiques préférées, éventuellement combinées :
- chaque aimant a, parallèlement aux pièces polaires, une section constante,
- l'écartement entre deux aimants successifs de l'âme est compris entre 1 et 4 fois la largeur de chaque aimant mesurée parallèlement à ladite ligne moyenne,
- la largeur de chaque aimant, mesurée parallèlement à la ligne moyenne, vaut entre 50 % et 200 % de la hauteur de ces aimants, mesurée transversalement aux pièces polaires,
- la largeur de chaque aimant, mesurée parallèlement à la ligne moyenne, est sensiblement égale à sa dimension mesurée transversalement à cette ligne moyenne et parallèlement aux pièces polaires,
- chaque aimant est cylindrique,
- la ligne moyenne est rectiligne,
- la ligne moyenne est circulaire : dans ce cas la dimension des aimants parallèlement à cette ligne moyenne définit un arc d'amplitude angulaire typiquement de l'ordre de 1 à 15°, par exemple entre 3 et 10° environ ; dans ce cas également l'écartement des aimants le long de la ligne moyenne définit un arc d'amplitude typiquement comprise entre 0° et 36° (cas à 10 aimants),
- l'écartement des aimants varie, le long de la ligne moyenne,
- les aimants sont disposés axialement,
- les aimants sont disposés radialement,
- les aimants sont centrés sur la ligne moyenne,
- certains au moins des aimants sont disposés de part et d'autre de la ligne moyenne, par exemple en alternance,
- cette âme comporte en outre une pièce allongée de maintien, fixée aux deux pièces polaires et dans laquelle sont ménagés des logements dans lesquels les aimants sont engagés sans jeu,
- la pièce allongée de maintien est en un matériau amagnétique tel que notamment aluminium, titane, matières plastiques,
- la pièce allongée de maintien comporte, en regard des pièces polaires, des rainures parallèles à la ligne moyenne dans lesquelles pénètrent sans jeu des nervures de positionnement dont sont munies ces pièces polaires et qui s'étendent parallèlement à cette ligne moyenne,
- les aimants s'étendent sur toute la distance séparant lesdites saillies des pièces polaires,
- ces nervures de positionnement s'étendent vers la ligne moyenne sur une distance valant de préférence entre 7 % et 15 % de la hauteur des aimants, mesurée transversalement aux pièces polaires,
- ces nervures de positionnement ont, parallèlement aux pièces polaires et transversalement à la ligne moyenne, une dimension inférieure à celle des aimants,
- l'âme est fixée aux pièces polaires par vissage de ces pièces polaires à la pièce allongée de maintien,
- les pièces polaires comportent, latéralement, des saillies longitudinales destinées à border des entrefers,
- les pièces polaires comportent, à l'opposé des aimants, des saillies longitudinales destinées à longer des entrefers,
- les pièces polaires sont en un matériau choisi dans le groupe des matériaux ferromagnétiques formé notamment de fer pur et de ses alliages, notamment fer-nickel, fer-silicium, fer-cobalt, et celui de la pièce allongée de maintien est choisi dans le groupe formé des matériaux amagnétiques.

Des objets, caractéristiques et avantages de l'invention ressortent de la description qui suit, donnée à titre d'exemple non limitatif, en regard des dessins annexés sur lesquels :
- la figure 1 est une vue en perspective, avec arrachements partiels, d'un barreau magnétique conforme à l'invention, de forme rectiligne,
- la figure 2 est une vue partielle de dessus d'un autre barreau magnétique, de forme circulaire et à aimantation radiale,
- la figure 3 est une vue de dessus d'encore un autre barreau magnétique, de forme circulaire et à aimantation axiale, sans ses pièces polaires,
- la figure 4 est une vue partielle en perspective du barreau de la figure 3, avec ses pièces polaires,
- la figure 5 est une vue de dessus de l'âme d'un autre barreau magnétique circulaire à aimantation axiale,
- la figure 6 est une vue en coupe de cette âme, selon la ligne VI-VI de la figure 5,
- la figure 7 est une autre vue en coupe de cette âme, selon la ligne VII-VII de la figure 5,
- la figure 8 est encore une autre vue en coupe de cette âme, selon la ligne VIII-VIII de la figure 5,
- la figure 9 est une vue en coupe d'un barreau comportant ladite âme, un aimant et ses pièces polaires, dans le même plan de coupe que pour la figure 6,
- la figure 10 est une autre vue en coupe de ce barreau, dans le même plan de coupe que la figure 7,
- la figure 11 est encore une autre vue en coupe de ce barreau, dans le même plan de coupe que la figure 8,
- la figure 12 est encore une autre vue en coupe du barreau de la figure 5, selon la ligne XII-XII,
- la figure 13, est une autre vue selon une variante de la figure 12,
- la figure 14 est un graphique montrant la variation sur un tour du flux d'induction magnétique le long des dents interne (I) et externe (E) d'un barreau magnétique classique de même géométrie que celui des figures 5 à 13,
- la figure 15 est un graphique montrant la variation sur un tour du flux d'induction magnétique le long des dents interne (I) et externe (E) du barreau magnétique des figures 5 à 13,
- la figure 16 est une vue partielle de dessus d'un autre barreau magnétique, de forme circulaire et à aimantation axiale, sans ses pièces polaires, et
- la figure 17 est une vue en coupe de ce barreau selon la ligne XVII - XVII de la figure 16.

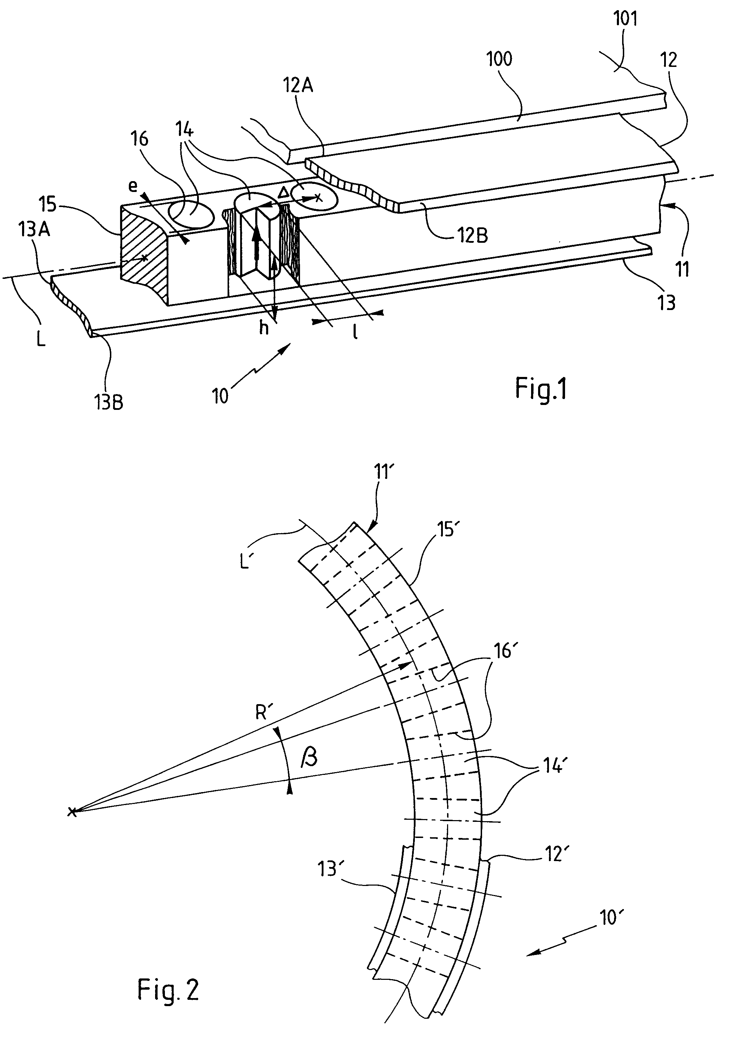

La figure 1 représente un barreau magnétique, désigné par la référence générale 10, comportant une âme aimantée 11 enserrée entre deux pièces polaires planes 12 et 13.

L'âme aimantée 11 est allongée selon une ligne moyenne L, ici rectiligne, et les pièces polaires 12 et 13 s'étendent le long de l'âme, parallèlement à cette ligne moyenne, en débordant latéralement, transversalement à cette ligne en sorte de former des saillies longitudinales 12A et 12B, 13A et 13B, adaptées à longer des entrefers (un exemple en est donné sous la référence 100) au sein par exemple d'un palier magnétique rectiligne (une partie d'un tel palier est représentée sous la référence 101).

Cette âme aimantée a une aimantation permanente perpendiculaire à la ligne moyenne et aux plaques constituant les pièces polaires planes.

Cette âme aimantée comprend, le long de la ligne moyenne, une succession discontinue d'aimants identiques disjoints 14. Cette succession est ici parallèle à L, les aimants étant tous centrés sur cette ligne L.

Les aimants 14 ont de préférence, parallèlement à la ligne moyenne et aux pièces polaires, une section constante.

Cette section est avantageusement de forme géométrique simple (carrée, rectangulaire, polygonale ...). De manière préférée cette forme simple est cylindrique, ce qui conduit à une grande facilité de réalisation.

Si on désigne par :
. l la largeur de chaque aimant parallèlement à la ligne moyenne,
. h la hauteur de chaque aimant parallèlement au sens d'aimantation, et
. e la dimension de chaque aimant transversalement à la ligne moyenne et au sens d'aimantation,
. Δ l'écart entre deux aimants successifs, (plus précisément entre leurs centres), on a avantageusement les relations approximatives suivantes :
   - l = e (ce qui correspond au diamètre dans le cas d'aimants cylindriques),
   - l vaut entre 50 % et 200 % de h,
   - Δ vaut entre 1 et 4 fois l,
   - e vaut entre 50 % et 80 % de la largeur des pièces polaires.

L'écartement Δ est ici constant mais peut, en variante non représentée, varier le long de la ligne moyenne, par exemple de façon périodique.

Outre les aimants 14, l'âme aimantée 11 comporte avantageusement une pièce allongée de maintien 15 dans laquelle sont ménagés des logements 16 dans lesquels les aimants sont engagés sans jeu (d'où un intérêt que leur section soit constante).

Dans une version simplifiée non représentée les aimants sont libres, sans la pièce 15 ; la présence de cette dernière a toutefois l'avantage de maintenir en position et de protéger les aimants, et de permettre une rigidité mécanique de l'ensemble du barreau en minimisant les sollicitations que les aimants doivent subir.

Cette pièce 15 est, du point de vue magnétique, un matériau amagnétique. Il s'agit par exemple de titane, ou d'aluminium, de cuivre, de plastiques ...

La figure 2 représente un autre barreau 10', conforme à l'invention dont la ligne moyenne L' est non plus rectiligne mais circulaire, de rayon R'.

Les mêmes signes de référence qu'à la figure 1 y sont utilisés, mais avec addition de l'indice "prime".

On peut noter que les logements 16' ainsi que les aimants 15' sont orientés radialement, les pièces polaires 12' et 13' étant des couronnes concentriques de rayons différents.

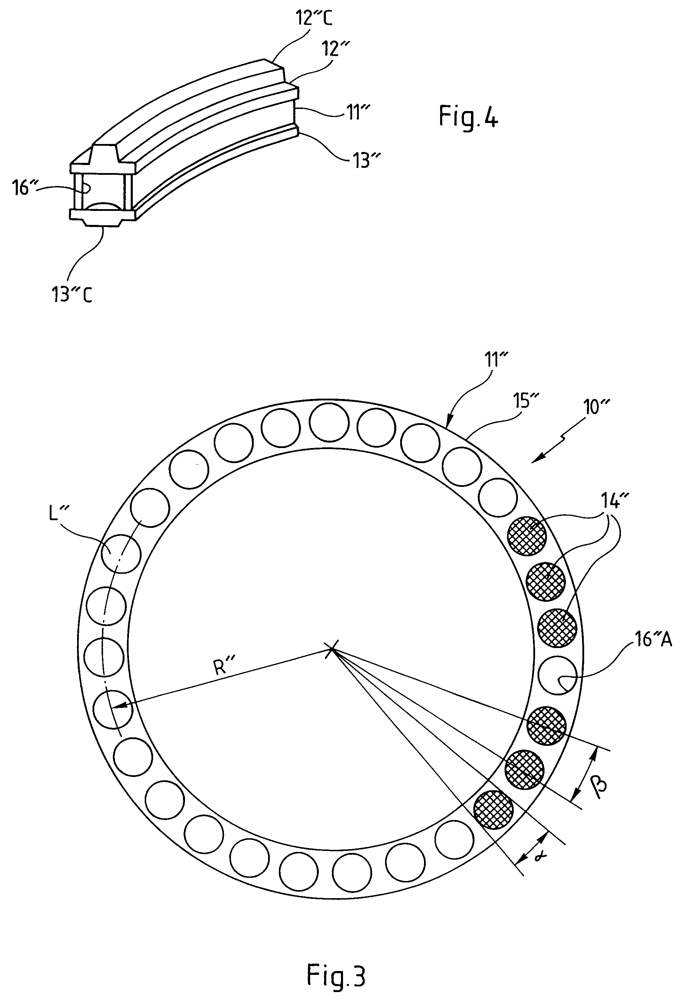

Les figures 3 et 4 représentent de même un barreau 10'' dont l'âme 11'' s'étend selon une ligne moyenne circulaire L'' (les mêmes numéros de référence qu'à la figure 1 sont utilisés, mais avec addition d'un indice "seconde"). A la différence du cas de la figure 2, les aimants 14'' sont orientés axialement tandis que les pièces polaires 12'' et 13'' comportent des anneaux plats de même diamètre et décalés axialement de part et d'autre de l'âme.

Ainsi que cela ressort de la partie droite de la figure 3, certains des logements (ici le logement 16''A) peuvent rester vides, sans aimants 14''.

Les saillies longitudinales des pièces polaires destinées à longer des entrefers peuvent être constituées, non pas par leurs tranches comme à la figure 1, mais par des nervures 12''C et 13''C disposées à l'opposé de l'âme 11''.

La dimension circonférentielle des aimants (parallèlement à la ligne L'') définit en général un arc α d'amplitude angulaire typiquement de l'ordre de 1 à 15°, par exemple comprise entre 3° et 10° environ (cas de la figure 3).

Dans l'exemple de la figure 2 l'écartement angulaire β entre les centres des aimants est de 10° tandis qu'il est d'environ 13° à la figure 3 (pour 28 logements au total).

De manière préférée le rapport α/β est dans la même plage que celle indiquée ci-dessus pour 1/Δ.

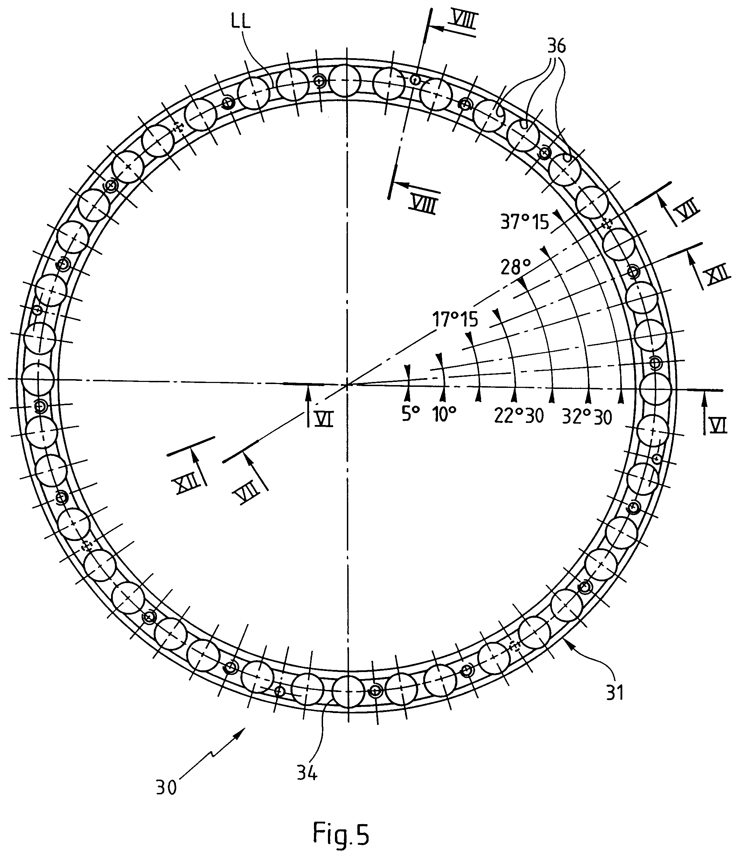

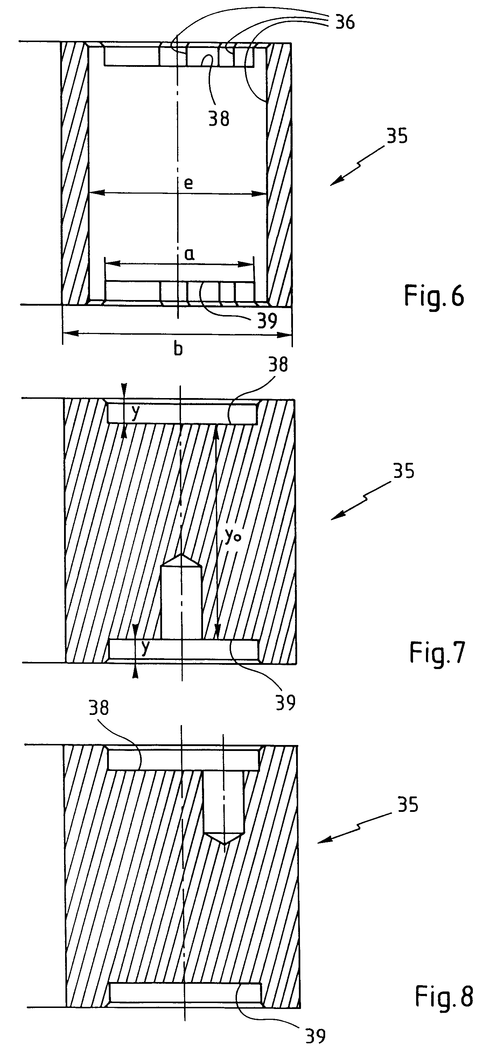

Les figures 5 à 13 définissent une variante de réalisation du barreau des figures 3 et 4, avec 40 logements 34 d'espacements variables.

Ce barreau 30 comporte une pièce de maintien 35 dans les tranches de laquelle sont ménagées des rainures 38 et 39 dont la largeur a représente environ 65% de la largeur b de la pièce 35.

La dimension e des aimants (c'est-à-dire leur diamètre lorsqu'ils sont cylindriques) est ici comprise entre a et b.

La profondeur y des rainures correspond entre 0 % et 15 % de la hauteur yₒ des aimants, c'est-à-dire de la hauteur qui sépare les fonds des rainures.

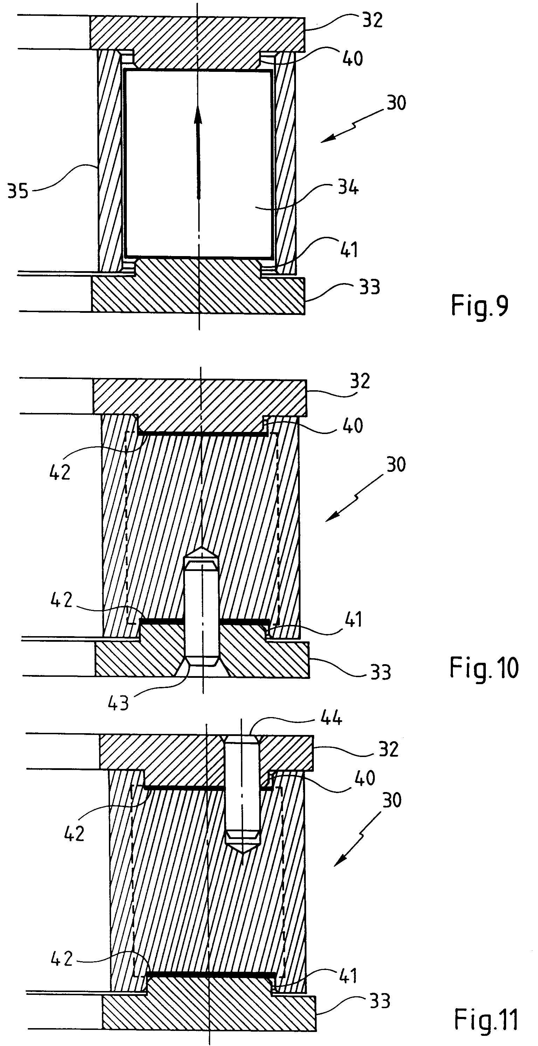

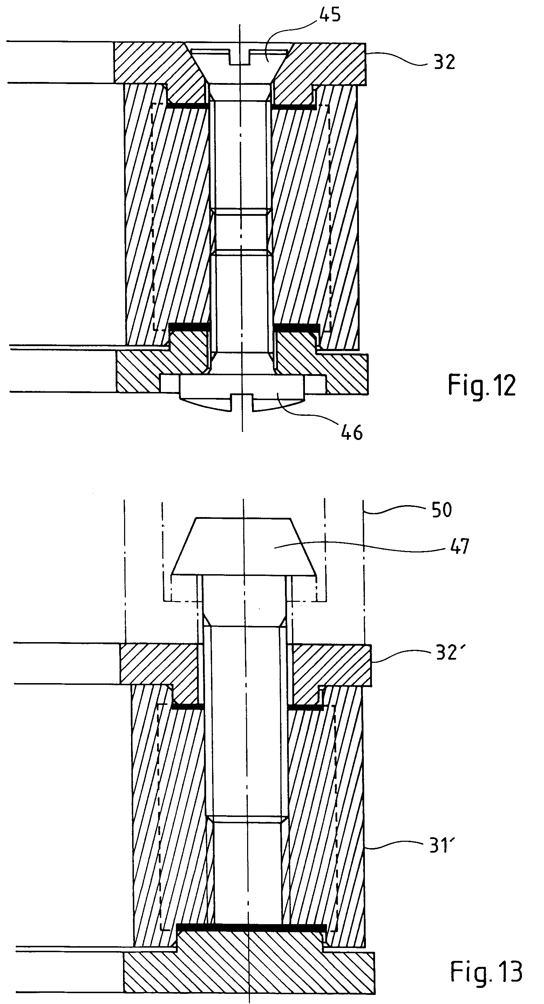

Les pièces polaires 32 et 33 comportent des nervures longitudinales 40 et 41 adaptées à occuper sensiblement toute la largeur des rainures 38 et 39 (voir les figures 10 et 11) et qui participent au positionnement relatif des pièces polaires et de la pièce 35 ainsi qu'au maintien axial des aimants.

De la colle 42 peut être disposée entre le fond des rainures et les nervures ; toutefois il y a de préférence absence de colle entre les aimants 34 et les logements 36 ou les nervures 40 et 41.

La fixation des pièces polaires à la pièce 35, indépendamment des aimants est de préférence complétée par des vis 43, 44, 45 ou 46 disposées circonférentiellement entre les logements 36 et servant les unes à fixer la pièce polaire 32, les autres à fixer la pièce polaire 33.

Dans l'exemple représenté, certaines des vis (les vis 43, 45 et 46 qu'elles soient situées dans l'une ou l'autre des pièces polaires) sont disposées de façon médiane entre les bords de la pièce polaire considérée, tandis que d'autres vis (les vis 44) sont décalées, ici vers l'extérieur.

On voit à la figure 5 que les vis 43, 45 ou 46 sont disposées après chaque groupe de deux logements tandis que les vis 44 sont au nombre de 4 : cela explique les variations d'écarts angulaires le long de la ligne moyenne LL.

La figure 13 représente un organe de fixation 47 tel qu'une vis à tête épaulée servant à la fixation de l'âme 31', non seulement de la pièce polaire 32, mais aussi d'une pièce mobile 50.

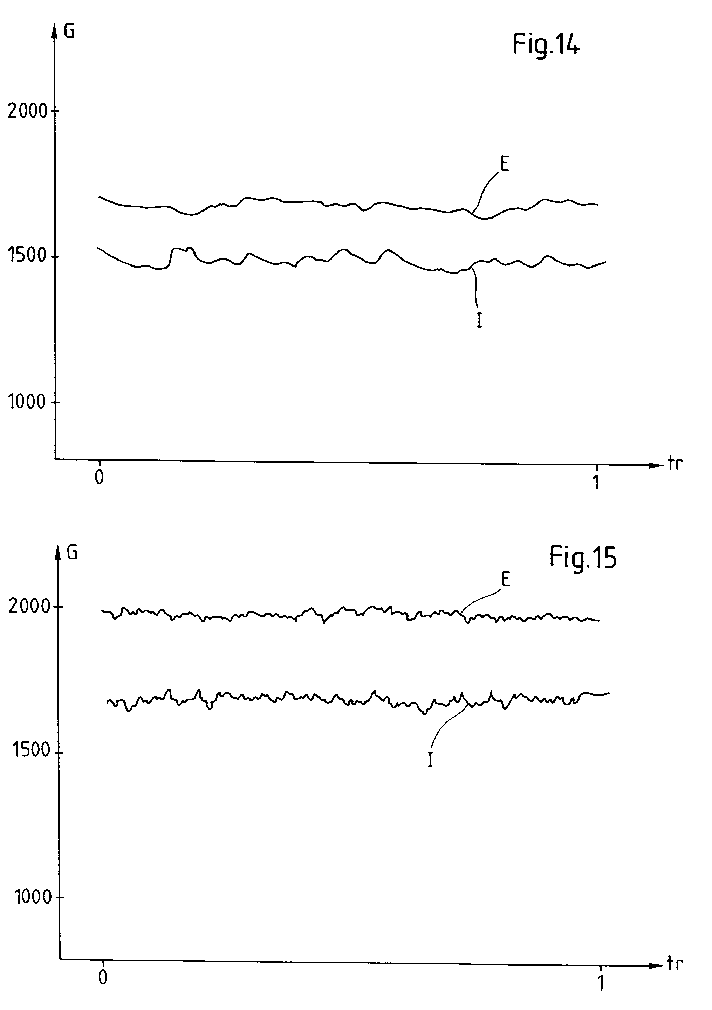

La figure 14 visualise l'évolution sur un tour du flux d'induction mesuré selon une tranche interne (courbe I) et une tranche externe (courbe E) d'un pièce polaire d'un barreau ayant la géométrie globale du barreau 30 mais avec une âme entièrement constituée d'aimants jointifs.

La figure 15 visualise les mêmes évolutions pour le barreau 30.

On observe que, malgré la succession discrète d'aimants du barreau 30, la constance du flux est au moins aussi bonne, si ce n'est meilleure qu'avec le barreau classique de la figure 14.

Les barreaux avaient les dimensions suivantes :
- rayon moyen : 80 mm
- dimension radiale des âmes : 7 mm
- hauteur des âmes : 13 mm
- rayon interne des pièces polaires : 76,5 mm
- rayon externe des pièces polaires : 88,5 mm
- épaisseur des pièces polaires
   y compris nervures : 3 mm

Le barreau 30 avait en outre les particularités suivantes :
- profondeur des nervures : 1 mm
- hauteur des aimants : 11 mm
- diamètre des aimants : 8,5 mm
- matériau des aimants : samarium-cobalt
- matériau de la pièce de maintien : titane
- matériau des pièces polaires : fer nickel

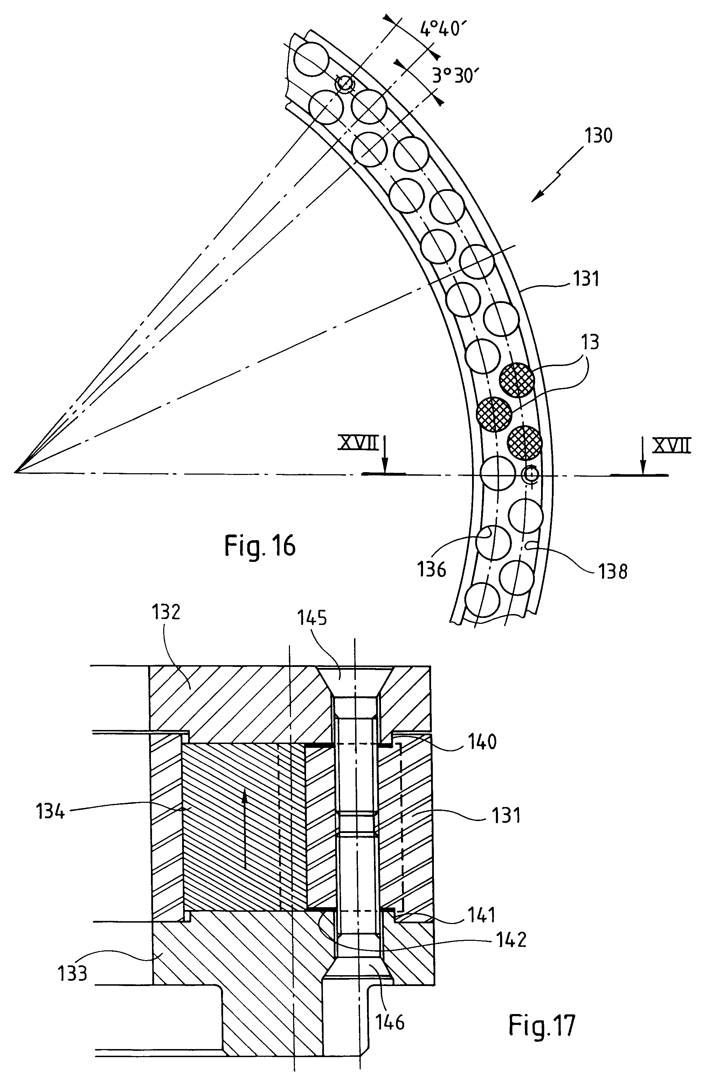

Les figures 16 et 17 représentent une variante de réalisation dans le cas d'une âme de forme circulaire, d'une succession discontinue d'aimants 134 qui, à la différence des modes de réalisation indiqués ci-dessus, ne suivent qu'approximativement la ligne moyenne, certains au moins des aimants sont disposés de part et d'autre de cette ligne. Plus précisément les aimants alternent de façon régulière de part et d'autre de cette ligne, formant ainsi une succession "ondulée" d'aimants.

Les mêmes signes de référence des figures 5 à 13 sont ici repris, sans indice mais avec une addition du nombre 100.

Une telle configuration a notamment pour avantage qu'on peut utiliser des aimants d'une application précédente pour une plus exigente, ou différente.

L'invention se prête à de nombreuses applications dont des paliers ou des butées magnétiques à barreaux à aimantation permanente, on utilise par exemple pour des broches d'usinage, les rotors de turbo-pompes, de pompes cryogéniques, de pompes moléculaires, dans les tubes à rayon X, dans les turbo-compresseurs, dans les systèmes à levitation, les amortisseurs, les paliers de miroir de renvoi de haute précision, les volants d'inertie spatiaux ou terrestres, etc ...

Il va de soi que la description qui précède n'a été proposée qu'à titre d'exemple non limitatif et que de nombreuses variantes peuvent être proposées par l'homme de l'art sans sortir du cadre de l'invention. Ainsi, en particulier, d'autres formes d'aimants sont possibles, notamment : tuiles disjointes, parallélépipèdes rectangles, pavés aux angles arrondis, cylindres élliptiques.

## Revendications

1. Barreau magnétique (10, 10', 10'', 30, 130) comportant une âme aimantée (11, 11', 11'', 31, 131) allongée, selon une ligne moyenne (L, L', L'', LL), enserrée entre deux pièces polaires (12, 13 ; 12', 13' ; 12'', 13'' ; 32, 33 ; 132, 133) parallèles l'une à l'autre et longeant cette âme aimantée transversalement à son aimantation permanente, caractérisé en ce que cette âme aimantée comprend sensiblement, le long de cette ligne moyenne, une succession discontinue d'aimants identiques disjoints (14, 14', 14'', 34, 134).

2. Barreau magnétique selon la revendication 1, caractérisé en ce que chaque aimant a, parallèlement aux pièces polaires, une section constante.

3. Barreau magnétique selon la revendication 2, caractérisé en ce que l'écartement (Δ) entre deux aimants successifs de l'âme est compris entre 1 et 4 fois la largeur (l) de chaque aimant mesurée parallèlement à ladite ligne moyenne.

4. Barreau magnétique selon la revendication 2 ou la revendication 3, caractérisé en ce que la largeur (l) de chaque aimant, mesurée parallèlement à la ligne moyenne, vaut entre 50 % et 200 % de la hauteur (h) de ces aimants, mesurée transversalement aux pièces polaires.

5. Barreau magnétique selon l'une quelconque des revendications 2 à 4, caractérisé en ce que la largeur (l) de chaque aimant, mesurée parallèlement à la ligne moyenne, est sensiblement égale à sa dimension (e) mesurée transversalement à cette ligne moyenne et parallèlement aux pièces polaires.

6. Barreau magnétique selon l'une quelconque des revendications 2 à 5, caractérisé en ce que chaque aimant est cylindrique.

7. Barreau magnétique selon l'une quelconque des revendications 2 à 6, caractérisé en ce que la ligne moyenne (L) est rectiligne.

8. Barreau magnétique selon l'une quelconque des revendications 2 à 6, caractérisé en ce que la ligne moyenne (L', L'', LL) est circulaire.

9. Barreau magnétique selon la revendication 8, caractérisé en ce que la dimension des aimants parallèlement à cette ligne moyenne définit un arc (α) d'amplitude angulaire de l'ordre de 1 à 15°.

10. Barreau magnétique selon la revendication 8 ou la revendication 9, caractérisé en ce que l'écartement des aimants le long de la ligne moyenne définit un arc (β) d'amplitude comprise entre 0° et 36°.

11. Barreau magnétique selon l'une quelconque des revendications 8 à 10, caractérisé en ce que l'écartement des aimants varie, le long de la ligne moyenne.

12. Barreau magnétique selon l'une quelconque des revendications 8 à 11, caractérisé en ce que les aimants (14'', 34) sont disposés axialement.

13. Barreau magnétique selon l'une quelconque des revendications 8 à 10, caractérisé en ce que les aimants (14') sont disposés radialement.

14. Barreau magnétique selon l'une quelconque des revendications 1 à 13, caractérisé en ce que les aimants sont centrés sur la ligne moyenne.

15. Barreau magnétique selon l'une quelconque des revendications 1 à 13, caractérisé en ce que certains au moins des aimants sont disposés de part et d'autre de la ligne moyenne.

16. Barreau magnétique selon l'une quelconque des revendications 1 à 15, caractérisé en ce que cette âme comporte en outre une pièce allongée de maintien (15, 15', 15'', 35, 135), fixée aux deux pièces polaires et dans laquelle sont ménagés des logements (16, 16', 16'', 36, 136) dans lesquels les aimants sont engagés sans jeu.

17. Barreau magnétique selon la revendication 13, caractérisé en ce que la pièce allongée de maintien est en un matériau amagnétique.

18. Barreau magnétique selon la revendication 16 ou la revendication 17, caractérisé en ce que la pièce allongée de maintien comporte, en regard des pièces polaires, des rainures (38, 39, 138) parallèles à la ligne moyenne dans lesquelles pénètrent sans jeu de nervures de positionnement (40, 41, 140) dont sont munies ces pièces polaires et qui s'étendent parallèlement à cette ligne moyenne.

19. Barreau magnétique selon la revendication 18, caractérisé en ce que les aimants s'étendent sur toute la distance séparant lesdites saillies des pièces polaires.

20. Barreau magnétique selon la revendication 18 ou la revendication 19, caractérisé en ce que ces nervures de positionnement s'étendent vers la ligne moyenne sur une distance (y) valant entre 7 % et 15 % de la hauteur des aimants, mesurée transversalement aux pièces polaires.

21. Barreau magnétique selon l'une quelconque des revendications 18 à 20, caractérisé en ce que ces nervures de positionnement ont, parallèlement aux pièces polaires et transversalement à la ligne moyenne, une dimension (a) inférieure à celle (e) des aimants.

22. Barreau magnétique selon l'une quelconque des revendications 16 à 21, caractérisé en ce que l'âme est fixée aux pièces polaires par vissage de ces pièces polaires à la pièce allongée de maintien.

23. Barreau magnétique selon l'une quelconque des revendications 16 à 22, caractérisé en ce que les pièces polaires comportent, latéralement, des saillies longitudinales (12A, 13A, 12B, 13B) destinées à border des entrefers.

24. Barreau magnétique selon l'une quelconque des revendications 16 à 22, caractérisé en ce que les pièces polaires comportent, à l'opposé des aimants, des saillies longitudinales (12''A, 13''A) destinées à longer des entrefers.

25. Barreau magnétique selon l'une quelconque des revendications 16 à 24, caractérisé en ce que les pièces polaires sont en un matériau ferromagnétique et celui de la pièce allongée de maintien est en un matériau amagnétique.
